# EUROPEAN PATENT SPECIFICATION

(11) **EP 3 318 818 B1**
(45) Date of publication and mention of the grant of the patent: **05.02.2020**
(21) Application number: 15897190.3
(22) Date of filing: 02.07.2015
(51) Int. Cl.: F03G 6/06, F16L 53/00, F24S 40/00, F24S 40/70, F24S 23/74, F24S 25/13

(54) **SOLAR HEAT COLLECTOR**
SONNENWÄRMEKOLLEKTOR
DISPOSITIF DE CAPTATION DE CHALEUR SOLAIRE

(43) Date of publication of application: 09.05.2018
(73) Proprietor: Chiyoda Corporation, Kanagawa 220-8765 (JP)
(72) Inventor: KANEMITSU, Masaya, Yokohama-shi Kanagawa 220-8765 (JP); SHIRAI, Jotaro, Yokohama-shi Kanagawa 220-8765 (JP); KAIDA, Ryuichi, Yokohama-shi Kanagawa 220-8765 (JP); SUZUKI, Yasushi, Yokohama-shi Kanagawa 220-8765 (JP); NISHIJIMA, Yasuyuki, Yokohama-shi Kanagawa 220-8765 (JP)
(74) Representative: Schröer, Gernot H.
(86) International application number: PCT/JP2015/069151
(87) International publication number: WO 2017/002263

(56) References cited:
- WO-A1-2013/085001
- JP-A- 2014 159 892
- JP-A- 2014 523 997
- JP-A- 2014 531 552
- JP-Y2- S6 125 314
- US-A1- 2009 050 194
- US-A1- 2010 175 689
- US-A1- 2012 292 303
- US-A1- 2014 238 523
- US-A1- 2014 270 740
- DATABASE WPI Section PQ, Week 201468 Thomson Scientific, London, GB; Class Q67, AN 2014-S65826 XP002787287, -& CN 203 731 722 U (UNIV BEIJING TECHNOLOGY) 23 July 2014 (2014-07-23)

## Description

The present invention relates to a solar heat collecting device that heats a heat transfer fluid flowing in a heat transfer fluid flow path by condensing sunlight.

Solar heat power generation systems that condense sunlight into a heat transfer fluid flow path using a reflecting mirror to heat the heat transfer fluid flowing in the heat transfer fluid flow path, generate steam using the heated heat transfer fluid, and rotates a steam turbine to generate power are known. The solar heat power generation systems can be introduced at a lower cost than photovoltaic power generation systems and can generate power for twenty-four hours by heat storage. Conventionally, a solar heat power generation system using oil as a heat transfer fluid has been proposed (see, for example, Patent Document 1).

In recent years, molten salt has attracted attention as the heat transfer fluid used for solar heat power generation system. Since the molten salt has a high boiling point, the operation temperature can be made relatively high according to the molten salt and high temperature steam is generated to improve the power generation efficiency.

Since the molten salt solidifies at about 250°C, the heat transfer fluid flow path draws heat from the molten salt and the molten salt may solidify if the temperature of the heat transfer fluid flow path is relatively low when the molten salt is poured into the heat transfer fluid flow path after start-up or maintenance. For this reason, it is necessary to warm the heat transfer fluid flow path to a predetermined temperature or more before pouring the molten salt into the heat transfer fluid flow path.

As one of techniques to warm the heat transfer fluid flow path, it is conceivable to cause a current to flow in the heat transfer fluid flow path. The heat transfer fluid flow path can be warmed by Joule heat at that time when the current flows.
[patent document 1] JP 2014-102013 A

In a solar heat collecting device that heats a heat transfer fluid flowing in a heat transfer fluid flow path by condensing sunlight, a reflecting mirror and the heat transfer fluid flow path are rotatably supported by a frame. Many types of the frame have a truss structure in which a plurality of columnar members is connected in a triangle manner. As the columnar member, inexpensive steel is usually used.

When a cable for causing a current to flow in the heat transfer fluid flow path is routed to the frame, the cable sometimes needs to be routed to penetrate a closed loop (for example, a triangular shape) made of a plurality of columnar members. When a current flows in the cable penetrating the closed loop of the frame, an induction field is generated in the closed loop by the current, and there is a possibility that a loss is caused in the current flowing in the cable due to the influence of the induction field.
[patent document 2] US 2014/270740 A1

Discloses methods and systems for providing an impedance heat transfer fluid heating system in association with a parabolic trough solar concentrator. The system includes an intermediate terminal connector that electrically interconnects a receiver tube of the parabolic trough solar concentrator to a power supply. The intermediate terminal connector can include a pair of plates running parallel to the receiver tube. The system additionally includes a pair of end terminal connectors. Each end terminal connector features a receiver tube plate having an aperture that completely surrounds the receiver tube assembly pipe. The end terminal connectors can additionally include a terminal connector extension that is at an angle to the receiver tube plate. A current return conductor extends between an end terminal connector and the power supply. The current return conductor is supported by the collector frame or structure and/or a receiver tube support structure.

The document US 2012/0292303 discloses a solar heat collecting device according to the preamble of claim 1.

The present invention has been made in view of such circumstances, and an object of the present invention is to provide, in a solar heat collecting device provided with a frame to which a cable for causing a current to flow in a heat transfer fluid flow path is routed, a technology to decrease a loss of the current flowing in the cable.

To solve the above problem, a solar heat collecting device of a certain aspect of the present invention includes a heat transfer fluid flow path in which a heat transfer fluid that receives solar heat flows, a frame that supports the heat transfer fluid flow path, and a cable that causes a current to flow in the heat transfer fluid flow path. The frame has a closed loop including a first member made of a ferromagnetic material. The cable is routed to penetrate the closed loop, and a second member made of a non-magnetic material is provided in the middle of the closed loop.

According to this aspect, the second member made of a non-magnetic material is provided in the middle of the closed loop including the first member made of a ferromagnetic material, whereby occurrence of an induction field in the closed loop can be prevented when a current flows in the cable. This can reduce a loss of the current flowing in the cable.

The closed loop may include at least two first members. The at least two first members may be connected via the second member.

The first member may be made of ferromagnetic steel. The second member may be made of non-magnetic stainless steel.

Note that arbitrary combinations of the above configuration elements and those obtained by converting the expressions of the present invention among devices, methods, systems, and the like are also effective as aspects of the present invention.

According to the present invention, in a solar heat collecting device provided with a frame to which a cable for causing a current to flow in a heat transfer fluid flow path is routed, a loss of the current flowing in the cable can be decreased.

Fig. 1 is a diagram for describing a solar heat power generation system according to an embodiment of the present invention.
Fig. 2 is a diagram for describing a solar heat collecting device according to an embodiment of the present invention.
Fig. 3 is a perspective view illustrating a part of a solar heat collecting device according to an embodiment of the present invention.
Fig. 4 is a diagram for describing a structure of a frame according to an embodiment of the present invention.

Hereinafter, the same or equivalent configuration elements and members illustrated in the drawings are denoted with the same reference numerals, and redundant description is omitted as appropriate. Further, the dimensions of the members in the drawings are appropriately enlarged or reduced for facilitating understanding. Illustration of a part of the members less important for describing an embodiment in the drawings is omitted.

Fig. 1 is a diagram for describing a solar heat power generation system 100 according to an embodiment of the present invention. The solar heat power generation system 100 includes three areas of a light condensing area 121, a heat storage area 122, and a power generation area 123.

The light condensing area 121 mainly includes a solar heat collecting device 8. The solar heat collecting device 8 includes a heat transfer fluid flow path 11 in which a heat transfer fluid flows and a plurality of reflectors 13 that condenses sunlight to the heat transfer fluid flow path and heats the heat transfer fluid. The heated heat transfer fluid is sent to the heat storage area 122.

The heat storage area 122 includes a hot tank 102 and a cold tank 103. By storing the heat of the heated heat transfer fluid in the hot tank 102, power generation can be performed when necessary. For example, the power generation can be performed at night and in bad weather during the day.

The power generation area 123 includes a steam generator 104, a steam turbine generator 106, and a condenser 108. The steam generator 104 generates steam by heat exchange between cooling water and the heated heat transfer fluid, and the steam turbine generator 106 rotates a turbine by the steam. Power is generated by the rotation. The condenser 108 returns the steam to the cooling water.

Fig. 2 is a diagram for describing the solar heat collecting device 8 according to an embodiment of the present invention. As illustrated in Fig. 2, the solar heat collecting device 8 includes a plurality of (four in Fig. 1) light condensing units 10 and a connection flow path 50. Each of the light condensing units 10 includes the heat transfer fluid flow path 11 and the plurality of reflectors 13. The heat transfer fluid flow path 11 is supported by a plurality of support frames (see Fig. 3) arranged along the heat transfer fluid flow path 11. Further, the reflector 13 is rotatably supported by the frames.

The reflector 13 condenses the sunlight to the heat transfer fluid flow path 11 to heat the heat transfer fluid flowing in the heat transfer fluid flow path 11. A rotary device (not illustrated) is connected to the reflector 13. The rotary device rotates the reflector 13 according to the position of the sun, for example. As a result, the heat transfer fluid is intermittently heated.

Each heat transfer fluid flow path 11 is formed in a U-shaped manner and is composed of long straight portions 11a and 11b parallel to each other and a short straight portion 11c connecting one end portions of the long straight portions 11a and 11b. Each of the long straight portions 11a and 11b is composed of a plurality of heat collection elements 12 arranged in a linear manner. Flexible hoses (not illustrated) are connected to respective end portions of two adjacent heat collection elements 12. These two flexible hoses are connected by pipes (not illustrated). The short straight portion 11c is composed of a connection pipe 14. A length A of the long straight portions 11a and 11b may be about 500 to 600 m, and the length of each of the heat collection elements 12 may be about 100 to 200 m. The long straight portion 11a may be formed of 2 to 3 heat collection elements 12. Further, a length B of the short straight portion 11c may be 20 to 30 m.

The heat collection elements 12 is a linearly extending tube and is supported having its center positioned at a focal point of a parabolic cylindrical reflecting surface of the reflector 13. The connection pipe 14 causes the heat collection elements 12 positioned at ends of the long straight portions 11a and 11b to communicate with each other. The heat collection elements 12 and the connection pipe 14 may be formed of different metal materials or may be formed of the same metal material. Further, the heat collection elements 12 may be covered with a vacuum glass tube for heat insulation.

In the heat transfer fluid flow path 11, molten salt as a heat transfer fluid flows. The molten salt receives solar heat. Molten salt has a higher boiling than synthetic oil conventionally used in solar heat collecting devices, and thus can be warmed to a higher temperature. Therefore, the power generation efficiency of the solar eat power generation system 100 is improved. Meanwhile, the molten salt solidifies at about 250°C. Since the molten salt does not basically solidify because the molten salt is heated by solar heat during operation. However, the heat transfer fluid flow path 11 draws heat from the molten salt and the molten salt may solidify if the temperature of the heat transfer fluid flow path 11 is relatively low when the molten salt is poured into the heat transfer fluid flow path 11 after start-up or maintenance. Therefore, it is necessary to warm the heat transfer fluid flow path 11 to a predetermined temperature or higher before pouring the molten salt into the heat transfer fluid flow path 11.

As a technique of warming the heat transfer fluid flow path 11, it is conceivable to train a heating wire over the heat transfer fluid flow path 11 and to cause a current to flow in the heating wire to warm the heat transfer fluid flow path 11. However, when the heat collection elements 12 of the heat transfer fluid flow path 11 is covered with a vacuum glass tube for heat insulation, the heating wire cannot be trained.

Therefore, the light condensing unit 10 of the present embodiment includes a heating device 32 that causes a current to flow in the heat transfer fluid flow path 11 itself and warms the heat transfer fluid flow path 11 by Joule head generated when the current flows. The heating device 32 includes a power supply 23, a first cable 34, and a second cable 36. The first cable 34 electrically connects one pole of the power supply 23 and the long straight portion 11a of the heat transfer fluid flow path 11. The second cable 36 electrically connects the other pole of the power supply 23 and the long straight portion 11b of the heat transfer fluid flow path 11. Further, connecting wires 5a and 5b that connects the long straight portions 11a and 11b are provided. The first cable 34, the second cable 36, the connecting wires 5a and 5b, and the long straight portions 11a and 11b of the heat transfer fluid flow path 11 form a current path in which a current from the power supply 23 flows. When a current flows in the current path from the power supply 23, Joule heat is generated by electric resistance of the heat transfer fluid flow path 11. As a result, the heat transfer fluid flow path 11 can be heated.

The connection flow path 50 is an annular flow path and is connected to each heat transfer fluid flow path 11. Further, the connection flow path 50 is also connected with the hot tank 102 and the cold tank 103 of the heat storage area 122. Therefore, each heat transfer fluid flow path 11, the hot tank 102 and the cold tank 103 are connected via the connection flow path 50. The heat transfer fluid flows from the cold tank 103 into the connection flow path 50. The heat transfer fluid flowing in the connection flow path 50 flows into the long straight portion 11a of each heat transfer fluid flow path 11. The heat transfer fluid passing through the heat collection elements 12 of the long straight portion 11a and heated flows into the long straight portion 11b through the connection pipe 14. The heat transfer fluid passing through the heat collection elements 12 of the long straight portion 11b and heated returns to the connection flow path 50 and flows into the hot tank 102.

Fig. 3 is a perspective view illustrating a part of the solar heat collecting device 8 according to an embodiment of the present invention. As illustrated in Fig. 3, the solar heat collecting device 8 includes a first frame 30 and a second frame 31 on the ground, and the heat transfer fluid flow path 11 and the reflector 13 rotatably supported by the first frame 30 and the second frame 31. The first frame 30 and the second frame 31 illustrated in Fig. 3 support the long straight portion 11a of the heat transfer fluid flow path 11.

In addition, the solar heat collecting device 8 includes the heating device 32 that causes a current to flow in the heat transfer fluid flow path 11 and warms the heat transfer fluid flow path 11 by Joule head generated when the current flows. As described above, the heating device 32 includes the power supply 23, the first cable 34, and the second cable 36.

The power supply 23 is a power supply capable of transmitting a single-phase current and is disposed inside the first frame 30. The first cable 34 is routed to the first frame 30 and electrically connects one pole of the power supply 23 and the long straight portion 11a of the heat transfer fluid flow path 11. The second cable 36 electrically connects the other pole of the power supply 23 and the long straight portion 11b of the heat transfer fluid flow path 11. The second cable 36 is routed to a frame that supports the long straight portion 11b of the heat transfer fluid flow path 11.

As described above, when a current flows from the power supply 23 to the heat transfer fluid flow path 11 via the first cable 34 and the second cable 36, Joule heat is generated by the electric resistance of the heat transfer fluid flow path 11. As a result, the heat transfer fluid flow path 11 can be heated.

Fig. 4 is a diagram for describing a structure of a frame according to an embodiment of the present invention. In Fig 4, the first frame 30 will be described. However, the same applies to the second frame 31. As illustrated in Fig. 4, the first frame 30 has a truss structure in which a plurality of columnar-shaped first members 40 is connected in a triangle manner. The first member 40 is made of a ferromagnetic material. As the ferromagnetic material, ferromagnetic steel can be exemplified.

The first frame 30 has a plurality of closed loops including the first member 40. For example, three first members 40a, 40b and 40c constitute a triangular closed loop 42. As described in Fig. 3, in the solar heat collecting device 8 according to the present embodiment, the power supply 23 is arranged inside the first frame 30. Then, to route the first cable 34 from the inside to an outside of the first frame 30, the first cable 34 penetrates the closed loop 42.

Here, in the solar heat collecting device 8 according to the present embodiment, the two first members 40a and 40b, of the three first members that constitute the closed loop 42, are connected via a plate-like second member 44. The first members 40a and 40b, and the second member 44 are connected with bolts 45. The second member 44 is made of a non-magnetic material. As the non-magnetic material, non-magnetic stainless steel can be exemplified. In this way, most of the closed loop 42 is constituted by the three first members 40a, 40b, and 40c. The second member 44 made of a non-magnetic material is provided in the middle of the closed loop 42.

As described above, in the solar heat collecting device 8 according to the present embodiment, the second member 44 made of a non-magnetic material is provided in the middle of the closed loop 42, and thus the closed loop 42 is not a closed loop made of only a ferromagnetic material . In a case of a closed loop constituted by only a ferromagnetic material, an induction field is generated in the closed loop by a current when the current flows in the cable that penetrates the closed loop, and there is a possibility that a loss is caused in the current flowing in the cable due to the influence of the induction field. On the other hand, in the present embodiment, since the second member 44 made of a non-magnetic material is provided in the middle of the closed loop 42, no induction field is generated in the closed loop 42 even if a current flows in the first cable 34. Therefore, the loss of current flowing in the first cable 34 can be reduced.

When cables are routed to a frame having a truss structure, if a power supply is arranged outside the frame and the cables are routed not to penetrate a closed loop of the frame, generation of the induction field can be suppressed and the loss of the current can be decreased. However, in this case, a large space is required around the frame. According to the solar heat collecting device 8 of the present embodiment, the power supply 23 can be arranged inside the first frame 30 without being bound by cable routing conditions, and thus space saving can be realized.

Note that, if all the first members 40 in the frame are formed of the non-magnetic material, the induction field can be prevented without providing the second member 44 in the middle of the closed loop 42, and the loss of the current can be decreased. However, forming all the first members 40 with the non-magnetic material is not favorable from the cost aspect. In the solar heat collecting device 8 according to the present embodiment, most parts of the frame are formed of the first member 40 that is a relatively inexpensive ferromagnetic material, and only the connecting portion of the first member 40 is formed of the second member 44. Therefore, the solar heat collecting device 8 of the present invention has an advantage in the cost aspect.

In Fig. 4, the closed loop 42 made of a ferromagnetic material and a non-magnetic material is formed by interposing the second member 44 between the two first members 40a and 40b, of the three first members that constitute the closed loop 42. However, the form of the second member made of the non-magnetic material and the position on the closed loop, where the second member is provided are not particularly limited. For example, a second member made of a non-magnetic material may be provided in the middle of one first member (for example, the first member 40a) made of a ferromagnetic material. Further, a columnar second member made of a ferromagnetic material may be arranged in place of one first member (for example, the first member 40a) made of a ferromagnetic material.

The present invention has been described on the basis of the embodiments. It is to be understood by those skilled in the art that the embodiments are merely examples, various modifications can be made to the combination of configuration elements and processing processes of the embodiments and that such modifications fall also within the scope of the present invention.

## Claims

1. A solar heat collecting device (8) comprising:
a heat transfer fluid flow path (11) in which a heat transfer fluid that receives solar heat flows;
a frame (30) that supports the heat transfer fluid flow path (11); and
a cable (34) that causes a current to flow in the heat transfer fluid flow path (11), **characterized in that** the frame (30) has a closed loop (42) including a first member (40, 40a, 40b, 40c, 40d) made of a ferromagnetic material,
the cable (34) is routed to penetrate the closed loop (42), and
a second member (44) made of a non-magnetic material is provided in a middle of the closed loop (42).

2. The solar heat collecting device (8) according to claim 1, wherein
the closed loop (42) includes at least the two first members (40, 40a, 40b, 40c, 40d), and
the at least two first members (40, 40a, 40b, 40c, 40d) are coupled through the second member (44).

3. The solar heat collecting device (8) according to claim 1 or 2, wherein
the first member (40, 40a, 40b, 40c, 40d) is made of ferromagnetic steel and
the second member (44) is made of non-magnetic stainless steel.

## Patentansprüche

1. Vorrichtung (8) zum Sammeln von Sonnenwärme, umfassend:
einen Durchflussweg (11) für Wärmeübertragungsfluid, auf dem ein Wärmeübertragungsfluid fließt, das Sonnenwärme empfängt;
einen Rahmen (30), der den Durchflussweg (11) für Wärmeübertragungsfluid trägt; und
ein Kabel (34), das bewirkt, dass Strom auf dem Durchflussweg (11) für Wärmeübertragungsfluid fließt,
**dadurch gekennzeichnet, dass**
der Rahmen (30) einen Regelkreis (42) aufweist, der ein erstes Element (40, 40a, 40b, 40c, 40d) umfasst, das aus einem ferromagnetischen Material besteht,
das Kabel (34) verlegt ist, um in den Regelkreis (42) einzudringen, und
ein zweites Element (44), das aus einem nicht magnetischen Material besteht, in der Mitte des Regelkreises (42) bereitgestellt wird.

2. Vorrichtung (8) zum Sammeln von Sonnenwärme nach Anspruch 1, wobei der Regelkreis (42) mindestens die beiden ersten Elemente (40, 40a, 40b, 40c, 40d) umfasst, und
die mindestens zwei ersten Elemente (40, 40a, 40b, 40c, 40d) über das zweite Element (44) gekoppelt sind.

3. Vorrichtung (8) zum Sammeln von Sonnenwärme nach Anspruch 1 oder 2, wobei
das erste Element (40, 40a, 40b, 40c, 40d) aus ferromagnetischem Stahl besteht, und
das zweite Element (44) aus nicht magnetischem Edelstahl besteht.

## Revendications

1. Dispositif de collecte de chaleur solaire (8) comprenant:
un trajet d'écoulement de fluide de transfert de chaleur (11) dans lequel s'écoule un fluide de transfert de chaleur qui reçoit de la chaleur solaire;
un bâti (30) qui support le trajet d'écoulement de fluide de transfert de chaleur (11); et
un câble (34) qui amène un courant à circuler dans le trajet d'écoulement de fluide de transfert de chaleur (11),
**caractérisé par le fait que**
le bâti (30) a une boucle fermée (42) comprenant un premier élément (40, 40a, 40b, 40c, 40d) fait d'un matériau ferromagnétique,
le câble (34) est acheminé pour pénétrer dans la boucle fermée (42), et
un second élément (44) fait d'un matériau non-magnétique est prévu au milieu de la boucle fermée (42).

2. Dispositif de collecte de chaleur solaire (8) selon la revendication 1, dans lequel
la boucle fermée (42) comprend au moins deux premiers éléments (40, 40a, 40b, 40c, 40d), et
les au moins deux premiers éléments (40, 40a, 40b, 40c, 40d) sont couplés par l'intermédiaire du second élément (44).

3. Dispositif de collecte de chaleur solaire (8) selon la revendication 1 ou 2, dans lequel
le premier élément (40, 40a, 40b, 40c, 40d) est fait d'acier ferromagnétique, et
le second élément (44) est fait d'acier inoxydable non-magnétique.
